(19) Europäisches Patentamt / European Patent Office / Office européen des brevets

(11) **EP 1 679 563 B1**

(12) **EUROPEAN PATENT SPECIFICATION**

| | |
|---|---|
| (45) Date of publication and mention of the grant of the patent: **27.10.2010 Bulletin 2010/43** | (51) Int Cl.: **G05B 13/02** (2006.01) **F02C 9/28** (2006.01) **F23N 1/02** (2006.01) **F02D 41/14** (2006.01) |

(21) Application number: **05113038.3**

(22) Date of filing: **28.12.2005**

(54) **Device and method for controlling a gas turbine electric power generating system**

Gerät und Verfahren zur Regelung einer Gasturbine zur elektrischen Stromerzeugung

dispositif et procédé de contrôle d'une turbine à gaz pour la production d'énergie électrique

(84) Designated Contracting States:
**AT BE BG CH CY CZ DE DK EE ES FI FR GB GR HU IE IS IT LI LT LU LV MC NL PL PT RO SE SI SK TR**

(30) Priority: **29.12.2004 IT MI20042542**

(43) Date of publication of application:
**12.07.2006 Bulletin 2006/28**

(73) Proprietor: **ANSALDO ENERGIA S.P.A.**
**16152 Genova (IT)**

(72) Inventor: **Lombardi, Filippo**
**16026 Montoggio (IT)**

(74) Representative: **Jorio, Paolo et al**
**STUDIO TORTA**
**Via Viotti 9**
**10121 Torino (IT)**

(56) References cited:
**WO-A-97/06471      GB-A- 1 462 390**
**US-A- 5 857 321**

- **PATENT ABSTRACTS OF JAPAN vol. 2003, no. 02, 5 February 2003 (2003-02-05) & JP 2002 295661 A (UNISIA JECS CORP), 9 October 2002 (2002-10-09)**
- **PATENT ABSTRACTS OF JAPAN vol. 014, no. 081 (M-0935), 15 February 1990 (1990-02-15) & JP 01 294915 A (TOSHIBA CORP), 28 November 1989 (1989-11-28)**
- **CHO D ET AL: "A NONLINEAR CONTROLLER DESIGN METHOD FOR FUEL-INJECTED AUTOMOTIVE ENGINES" JOURNAL OF ENGINEERING FOR GAS TURBINES AND POWER, ASME, NEW YORK, NY, US, vol. 110, no. 3, July 1988 (1988-07), pages 313-320, XP002054714 ISSN: 0742-4795**

EP 1 679 563 B1

**Description**

The present invention relates to a device and method for controlling a gas turbine electric power generating system.

As is known, gas turbine electric power generating systems, or turbogas systems, normally comprise a drive (turbodrive), of which form part a variable-geometry compressor, a combustion chamber, and a gas turbine; and a generator connected mechanically to the same shaft as the turbine and compressor, and by a main breaker to an electric power mains. Turbogas systems are also equipped with control devices for performing various operations necessary to ensure correct operation, and which must also ensure compliance with increasingly strict regulations governing system performance in terms of safety, stability, and the ability to respond to variations in mains power demand.

More specifically, the control devices must at least:

- regulate no-load turbine speed, i.e. when the generator is disconnected from the mains (as, for example, when starting up);
- control the electric load (active electric power) supplied to the mains, and, if necessary, assist in controlling mains frequency;
- control turbine exhaust gas temperature;
- limit exhaust gas temperature, with priority over other control functions, to prevent overheating damaging the system.

Measurable turbogas system quantities normally available for control purposes are the angular speed of the turbine and generator, active electric power supplied to the mains, and turbine exhaust gas temperature. Activation, on the other hand, acts on a feed valve supplying fuel to the combustion chamber (to regulate no-load speed, control the electric load, and limit exhaust gas temperature), and on the geometry of the compressor, by adjusting the inclination of a group of stator vanes (to control exhaust gas temperature).

In known control devices, each function is performed by a respective PID (Proportional-Integral-Derivative) controller. And, since a number of controllers act on the same actuator (i.e. the fuel feed valve), selection devices are provided to avoid conflict according to given rules. Firstly, a switch selectively enables electric load control and no-load speed adjustment, depending on whether the generator is connected or not to the mains (i.e. depending on the main breaker setting). And a minimum-selection port then assigns feed valve access to the controller involving the least effort (i.e. supplying the control signal with the lowest module).

Known control devices, however, have various drawbacks. A first problem lies in calibrating the PID controllers, which, given the numerous parameters involved and the complex nature of turbogas systems, is invariably difficult and non-repeatable, even when dealing with similar systems. As a result, start-up of the system is a long, painstaking job, and the sensitivity of the system to variations in machine parameters calls for frequent, equally painstaking adjustments. Other drawbacks have to do with performance, and are caused, in particular, by the integral action effect of the minimum-selected PID controllers. That is, since the non-selected controller is unable to act on the respective controlled variable to reduce the error in question, the contribution of the integral term tends to rapidly saturate the control signal. This is obviously a situation to be avoided, by causing unacceptable delays and preventing timely intervention of the excluded controller when needed. Anti-wind-up techniques have therefore been proposed, which basically provide for artificially forcing feedback to keep the out-of-control signal at a slightly higher value than the competing signal at the minimum-selection port. In this case, however, the non-selected controller tends to intervene when not strictly necessary, when the competing controller attempts to track a rapid variation in the respective controlled variable, thus also resulting in a significant impairment in performance. In fact, conventional systems fail to react promptly, especially in the case of sudden variations in load, and often manifest undesired oscillations incompatible with the increasingly strict stability requirements of recent regulations. More specifically, systems are required to assist in regulating the mains, and to withstand sudden switching from nominal conditions, in which the mains is virtually able to absorb infinite loads, to so-called "load island" conditions, in which a section of the mains is isolated, e.g. due to a fault, and only absorbs a limited load.

An example of a known device for controlling a gas turbine power plant is described in JP 2002 295661 A and includes regulating means that supply a first signal for controlling fuel supply to a combustion chamber and a second signal for controlling air intake by a compressor.

JP 01 294915 A discloses feedback control of turbine rotational speed in an inertia phase during gear shift in an automatic transmission.

CHANG G-K ET AL: "Modified integral variable structrue model following control of synchronous generator" PROCEEDINGS OF THE 2001 AMERICAN CONTROL CONFERENCE ACC. ARLINGTON, VA, JUNE 25-27, 2001, AMERICAN CONTROL CONFERENCE, NEW YOIRK, NY: IEEE US, vol.2, 25 june 2001(2001-06-05), pages 823-828 and SENJYU T ET AL: "Cooperative control of AVR and GOV for improving transient stability of power systems using fuzzy controlled" NEURAL NETWORKS TO POWER SYSTEMS, 1993, ANNPS '93, PROCEEDINGS OF THE SECOND INTERNATIONAL FORUM ON APPLICATIONS OF YOKOHAMA, JAPAN 19-22 APRIL 1993, NEW YORK, NY, USA, IEEE, IS, 19 April 1993, pages 35-40, teaches to apply sliding mode control techniques to generators in power generating systems.

It is an object of the present invention to provide a control device and method designed to eliminate the aforementioned drawbacks.

According to the present invention, there are provided a device and method for controlling an electric power generating system including a gas turbine, as claimed in Claims 1 and 6 respectively.

A non-limiting embodiment of the invention will be described by way of example with reference to the accompanying drawings, in which:

Figure 1 shows a simplified block diagram of an electric power generating system;
Figure 2 shows a block diagram of a control device incorporated in the Figure 1 system and in accordance with a first embodiment of the present invention;
Figures 3 and 4 show more detailed block diagrams of parts of the Figure 2 control device;
Figure 5 shows a block diagram of a control device in accordance with a second embodiment of the present invention;
Figures 6 and 7 show more detailed block diagrams of parts of the Figure 5 control device.

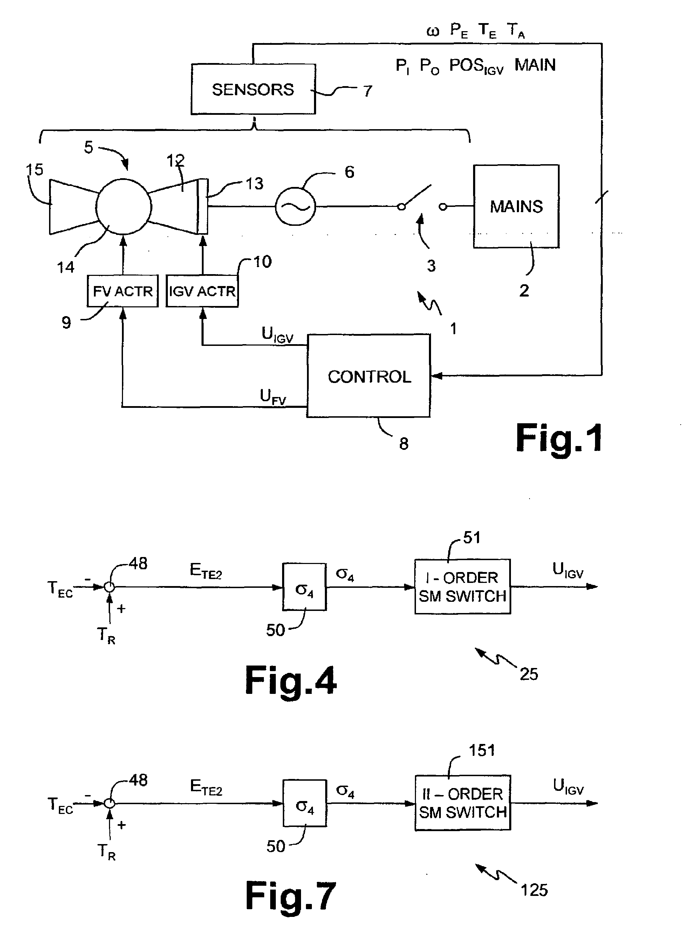

Figure 1 shows a gas turbine electric power generating system 1. System 1 is selectively connectable to a mains 2 by a main breaker 3, and comprises a turbodrive 5, a generator 6, a sensor module 7, a control device 8, and a first and second actuator 9, 10.

Turbodrive 5 is a conventional type comprising a compressor 12 with a variable-geometry input stage 13; a combustion chamber 14; and a gas turbine 15. More specifically, input stage 13 of compressor 12 has a number of vanes (not shown), the inclination of which is adjustable by second actuator 10 to regulate the air intake of compressor 12. Combustion chamber 14 is supplied with fuel by a known feed or proportional valve (not shown) activated by first actuator 9. Generator 6 - in this case, a synchronous alternator - is connected mechanically to the same shaft as turbine 15 and compressor 12, and rotated at the same angular speed $\omega$. And generator 6 converts the mechanical power produced by turbine 15 to active electric power $P_E$ available for mains 2.

By means of sensor module 7 - comprising a number of known sensors not shown in detail - at least angular speed $\omega$, active (electric) power $P_E$, and the exhaust gas temperature $T_E$ at exhaust of turbine 15 are detected and supplied to control device 8, which accordingly generates a first and second control signal $U_{FV}$, $U_{IGV}$, in turn supplied to first and second actuator 9, 10 respectively. Sensor module 7 preferably also detects and supplies control device 8 with an ambient temperature $T_A$, intake and output pressures $P_I$, $P_O$ of compressor 12, a current vane position $IGV_{POS}$ of input stage 13 of compressor 12, and a MAIN position signal indicating the position of main breaker 3.

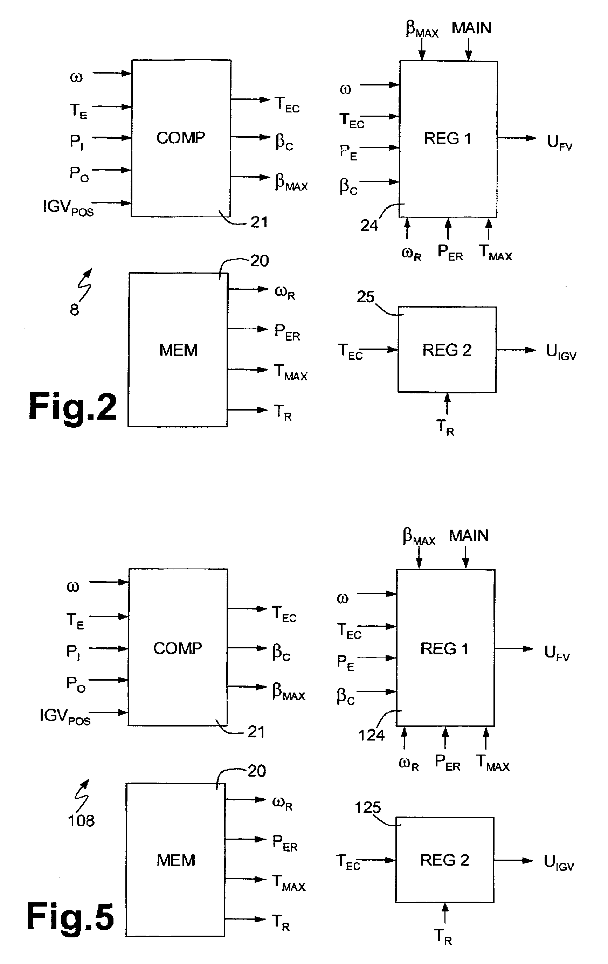

As shown in detail in Figure 2, control device 8 comprises a memory 20, a computing stage 21, and a first and second regulator 24, 25.

Memory 20 is connected to first and second regulator 24, 25, and contains a number of parameter reference values for controlling system 1. More specifically, memory 20 stores a reference angular speed $\omega_R$, a reference active power $P_{ER}$, and a maximum exhaust gas temperature $T_{MAX}$ of turbine 15, which are supplied to first regulator 24; and a reference exhaust gas temperature $T_R$ of turbine 15, which is supplied to second regulator 25, and which is lower than maximum temperature $T_{MAX}$ (e.g. $T_R = 0.99\,T_{MAX}$).

Computing stage 21 is connected to sensor module 7 to receive angular speed $\omega$, exhaust temperature $T_E$, ambient temperature $T_A$, intake and output pressures $P_I$, $P_O$ of compressor 12, and the current vane position $IGV_{POS}$ of input stage 13 of compressor 12, and accordingly calculates in known manner a current compression ratio $\beta_C$, and a maximum compression ratio $\beta_{MAX}$ of compressor 12 compatible with operating conditions; and a correct exhaust gas temperature $T_{EC}$ at exhaust of turbine 15, which takes into account the effect of ambient temperature $T_A$ and angular speed $\omega$.

First regulator 24 receives angular speed $\omega$ and active power $P_E$ from sensor module 7; current compression ratio $\beta C$, maximum compression ratio $\beta MAX$, and correct exhaust temperature $T_{EC}$ from computing stage 21; and reference angular speed $\omega_R$, reference active power $P_{ER}$, and maximum temperature $T_{MAX}$ from memory 20. As described in detail below, first regulator 24 generates first control signal $U_{FV}$ using a first-order, sliding-mode control algorithm to :

- control no-load angular speed $\omega$;
- control the active power $P_E$ supplied to mains 2 in parallel, assisting control of angular speed $\omega$, if necessary;
- limit exhaust temperature $T_E$ to below maximum exhaust temperature $T_{MAX}$; and
- limit the current compression ratio $\beta_C$ to below maximum compression ratio $\beta_{MAX}$. More specifically, first regulator 24 is configured to privilege that of the above control functions involving the least effort (i.e. least fuel supply).

Second regulator 25 receives the correct exhaust temperature $T_{EC}$ from computing stage 21, and reference temperature $T_R$ from memory 20, and generates second control signal $U_{IGV}$ using a sliding-mode control algorithm to maintain exhaust temperature $T_E$ equal to reference temperature $T_R$, as described below.

The synthesis of first and second regulator 24, 25 may advantageously be based on a model of turbodrive 5 employing three differential equations representing angular speed $\omega$ and the active power $P_E$ generated, compression ratio $\beta$, and exhaust temperature $T_E$.

ANGULAR SPEED $\omega$ AND ACTIVE POWER $P_E$

$$\begin{cases} \dfrac{dP_E}{dt} = f_1(\omega, \omega_R) \\[2mm] \dfrac{d\omega}{dt} = f_2(P_E, P_M, \omega) \\[2mm] \dfrac{dP_M}{dt} = f_3(\dot{m}_F, \omega) \\[2mm] \dfrac{d\dot{m}_F}{dt} = f_4(H_{FV}, \dot{m}_F) \\[2mm] \dfrac{dH_{FV}}{dt} = f_5(H_{FV}) + g_1 \cdot U_{FV} \end{cases} \tag{1}$$

where $P_M$ is the mechanical power supplied by turbine 15, $\dot{m}_F$ is the fuel supply to combustion chamber 14, $\dot{m}_A$ is the air intake of compressor 12, $H_{FV}$ is the position of first actuator 9, and $f_1$-$f_5$ and $g_1$ are appropriate functions of the variables indicated.

EXHAUST TEMPERATURE $T_E$

$$\begin{cases} \dfrac{dT_E}{dt} = \dfrac{T_M - T_E}{\tau_{TC}} \\[2mm] \dfrac{dT_M}{dt} = f_6(\dot{m}_A, \dot{m}_F) \\[2mm] \dfrac{d\dot{m}_A}{dt} = f_7(\omega, IGV_{POS}) \\[2mm] \dfrac{dIGV}{dt} = f_8(IGV_{POS}) + g_2 \cdot U_{IGV} \end{cases} \tag{2}$$

where $T_M$ is a measured exhaust temperature, $\tau_{TC}$ is a time constant of an exhaust temperature sensor (e.g. a thermocouple), and $f_6$-$f_8$ and $g_2$ are appropriate functions of the variables indicated.

COMPRESSION RATIO $\beta_C$

$$\begin{cases} \dfrac{d\beta_C}{dt} = f_9(\dot{m}_A, \dot{m}_F) \\[2mm] \dfrac{d\dot{m}_F}{dt} = f_4(H_{FV}, \dot{m}_F) \\[2mm] \dfrac{dH_{FV}}{dt} = f_5(H_{FV}) + g_1 \cdot U_{FV} \end{cases} \tag{3}$$

where $f_9$ is an appropriate function of the variables indicated.

As described below, first regulator 24 defines a sliding surface separately for each of the state variables (or errors of each variable with respect to the respective reference values). Second regulator 25 employs a sliding surface for correct exhaust temperature $T_{EC}$ or for the error with respect to reference temperature $T_R$.

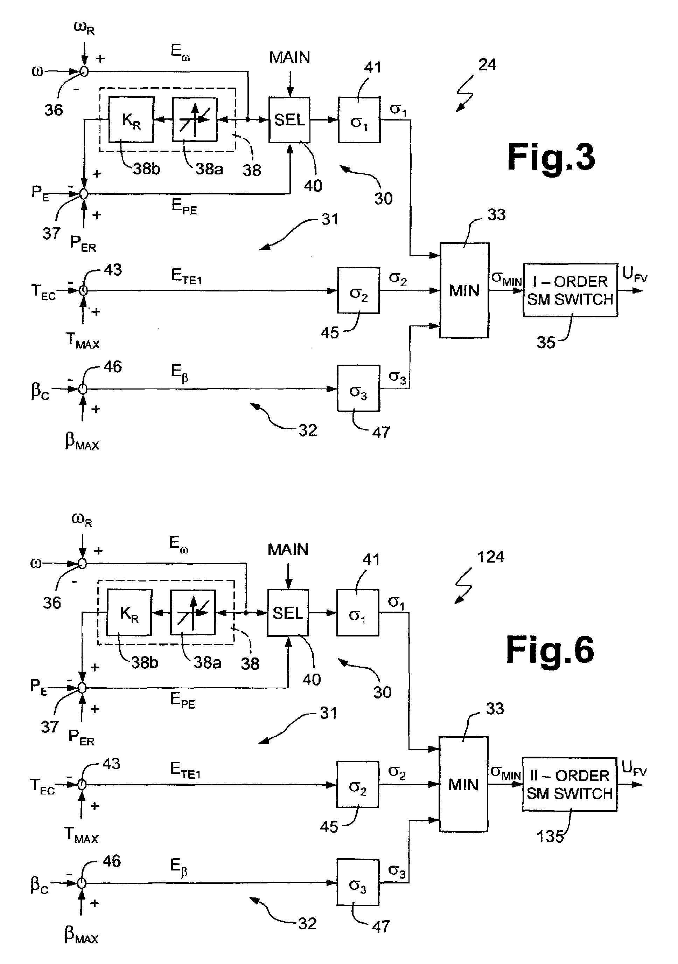

With reference to Figure 3, first regulator 24 comprises a first, a second, and a third regulating line 30, 31, 32 contending a minimum-section port 33; and a first switch stage 35 downstream from minimum-selection port 33.

First regulating line 30 comprises a first and a second subtraction node 36, 37; a correction stage 38 having a dead-band block 38a and a gain block 38b; a selector 40; and a first generating stage 41. The first subtraction node receives angular speed $\omega$ and reference angular speed $\omega_R$, and supplies a first input of selector 40 with a speed error $E_\omega$ given by:

$$E_\omega = \omega_R - \omega \qquad\qquad (4)$$

The second subtraction node 37 receives active power $P_E$, reference active power $P_{ER}$, and an angular speed regulation contribution resulting from speed error $E_\omega$ and supplied by correction stage 38, and calculates a power error $E_{PE}$ given by:

$$E_{PE} = P_{ER} - P_E + K_R * BM(E_\omega) \qquad\qquad (5)$$

More specifically, $K_R$ is a constant term from gain block 38b, while term $BM(E_\omega)$ results from dead-band block 38a, and is given by:

$$\begin{cases} BM(E_\omega) = 0 & \text{if} \quad |E_\omega| < B \\ BM(E_\omega) = E_\omega & \text{if} \quad |E_\omega| \geq B \end{cases} \qquad\qquad (6)$$

where B indicates a predetermined value range. In other words, power error $E_{PE}$ and the regulation based on it are unaffected by the correction, if speed error $E_\omega$ is small.

Power error $E_{PE}$ is supplied to a second input of selector 40, which has an output connected to first generating stage 41 and is controlled by position signal MAIN of main breaker 3. More specifically, if main breaker 3 is open (no-load operation), selector 40 transmits speed error $E_\omega$ to first generating stage 41; conversely, power error $E_{PE}$ is transmitted.

Below, operators $(\partial/\partial t + \lambda)$ and $(\partial/\partial t + \lambda)^2$ are used, which apply to a generic signal S(t) and are defined as follows:

$$(\partial/\partial t + \lambda)S(t) = \frac{\partial S(t)}{\partial t} + \lambda S(t) = \dot{S}(t) + \lambda S(t) \qquad\qquad (7)$$

$$(\partial/\partial t + \lambda)^2 S(t) = \frac{\partial^2 S(t)}{\partial t^2} + 2\frac{\partial S(t)}{\partial t}\lambda + \lambda^2 S(t) = \qquad\qquad (8)$$
$$= \ddot{S}(t) + 2\lambda\dot{S}(t) + \lambda^2 S(t)$$

$$\left(\partial/\partial t + \lambda\right)^3 S(t) =$$

$$= \frac{\partial^3 S(t)}{\partial t^3} + 3\frac{\partial^2 S(t)}{\partial t^2}\lambda + 3\frac{\partial S(t)}{\partial t}\lambda^2 + \lambda^3 S(t) = \qquad (9)$$

$$= \dddot{S} + 3\lambda\ddot{S}(t) + 3\lambda^2\dot{S}(t) + \lambda^3 S(t)$$

First generating stage 41 is connected to a first input of minimum-selection port 33, and supplies a first sliding surface $\sigma_1$ given by:

$$\sigma_1 = \left(\partial/\partial t + \lambda\right)^2 E_\omega(t) \qquad (10)$$

if main breaker 3 is open; and otherwise by:

$$\sigma_1 = \left(\partial/\partial t + \lambda\right)^2 E_{PE}(t) \qquad (11)$$

In equations (10) and (11) and the following, $\lambda$ is a characteristic parameter of the sliding surface. In the embodiment described here, first and second regulator 24, 25 use the same parameter $\lambda$ to synthesize the various sliding surfaces. Alternatively, the parameter $\lambda$ used by second regulator 25 is greater.

Second regulating line 31 comprises a third subtraction node 43 receiving correct exhaust temperature $T_{EC}$ and maximum temperature $T_{MAX}$; and a second generating stage 45. Third subtraction node 43 calculates a first temperature error $E_{TE1}$, which is supplied to second generating stage 45 and is given by:

$$E_{TE1} = T_{MAX} - T_{EC} \qquad (12)$$

Second generating stage 45 is connected to a second input of minimum-selection port 33, and supplies a second sliding surface $\sigma_2$ given by:

$$\sigma_2 = \left(\partial/\partial t + \lambda\right)^2 E_{TE1}(t) \qquad (13)$$

Third regulating line 32 comprises a fourth subtraction node 46 receiving current compression ratio $\beta_C$ and maximum compression ratio $\beta_{MAX}$; and a third generating stage 47. Fourth subtraction node 46 calculates a compression ratio error $E_\beta$, which is supplied to third generating stage 47 and is given by:

$$E_\beta = \beta_{MAX} - \beta_C \qquad (14)$$

Third generating stage 47 is connected to a third input of minimum-selection port 33, and supplies a third sliding surface $\sigma_3$ given by:

$$\sigma_3 = \left(\partial/\partial t + \lambda\right) E_\beta(t) \qquad (15)$$

First, second, and third generating stage 41, 45, 47 may advantageously be defined by high-pass filters (filtered derivators) or by observers, which in turn may be sliding-mode types.

At each instant, minimum-selection port 33 supplies first switch stage 35 with a minimum sliding surface $\sigma_{MIN}$ selected from first, second, and third sliding surface $\sigma_1$, $\sigma_2$, $\sigma_3$ :

$$\sigma_{MIN} = min(\sigma_1, \sigma_2, \sigma_3) \tag{16}$$

Finally, first switch stage 35 generates first control signal $U_{FV}$, using minimum sliding surface $\sigma_{MIN}$. More specifically, first control signal $U_{FV}$ is given by:

$$U_{FV} = -H^2 \ sat|\sigma_{MIN}/\Phi| \ sgn(\sigma_{MIN}) \tag{17}$$

where H and $\Phi$ are predetermined positive constants, "sgn" is the sign function, and "sat" indicates a saturation function defined, for example, as follows:

$$\begin{cases} sat|\sigma/\Phi| = 1 & \text{if } |\sigma/\Phi| \geq 1 \\ sat|\sigma/\Phi| = |\sigma/\Phi| & \text{if } |\sigma/\Phi| < 1 \end{cases} \tag{18}$$

Also, constant H is selected so that:

$$\sigma_{MIN}\frac{d\sigma_{MIN}}{dt} \equiv \frac{1}{2}\frac{d\sigma_{MIN}^2}{dt} < -H^2|\sigma_{MIN}| \tag{19}$$

Since the first control signal $U_{FV}$ generated according to equation (13) satisfies the convergence conditions of the first-order sliding-mode algorithms, speed error $E_\omega$, power error $E_{PE}$, first temperature error $E_{TE1}$, and compression ratio error $E_\beta$ are eliminated in finite time upon stress (e.g. a variation in demand by mains 2).

With reference to Figure 4, second regulator 25 comprises a fifth subtraction node 48, a fourth generating stage 50, and a second switch stage 51. Fifth subtraction node 48 receives reference temperature $T_R$ and correct exhaust temperature $T_{EC}$, and generates a second temperature error $E_{TE2}$, which is supplied to fourth generating stage 50 and is given by :

$$E_{TE2} = T_R - T_{EC} \tag{20}$$

Fourth generating stage 50 supplies a fourth sliding surface $\sigma_4$ given by :

$$\sigma_4 = (\partial/\partial t + \lambda)^2 E_{TE2}(t) \tag{21}$$

Second switch stage 51 generates second control signal $U_{IGV}$, using fourth sliding surface $\sigma_4$ and according to the equation :

$$U_{IGV} = -H^2 \ sat|\sigma_4/\Phi| \ sgn(\sigma_4) \qquad\qquad (22)$$

Since the second control signal $U_{IGV}$ also satisfies the convergence conditions of the first-order sliding-mode algorithms, second temperature error $T_{ET2}$ is also eliminated in finite time.

The control device according to the invention has considerable advantages by employing the sliding-mode control technique. In particular, discontinuous activation, as provided for by sliding-mode techniques, permits maximum control power at all times, so that extremely fast controllers can be achieved, with substantially no oscillation, and capable of finite-time error elimination. As compared with conventional controllers, error saturation problems are also solved. Moreover, the regulators described are highly insensitive to variations in controlled-process parameters, i.e. of turbodrive 5 and mains 2; and, given the robust nature of sliding-mode controllers, design and calibration are greatly simplified, thus also reducing system installation and maintenance cost.

In a variation of the embodiment described, which provides for integral control, first sliding surface $\sigma_1$ is generated by first generating stage 41 according to the equation :

$$\sigma_1 = \left(\partial/\partial t + \lambda\right)^3 \int E_\omega(t) \ dt \qquad\qquad (23)$$

if main breaker 3 is open, and otherwise according to the equation :

$$\sigma_1 = \left(\partial/\partial t + \lambda\right)^3 \int E_{PE}(t) \ dt \qquad\qquad (24)$$

Second sliding surface $\sigma_2$, third sliding surface $\sigma_3$, and fourth sliding surface $\sigma_4$ are generated by second, third, and fourth generating stages 45, 47, 50 respectively, on the basis of the equations :

$$\sigma_2 = \left(\partial/\partial t + \lambda\right)^3 \int E_{TE1}(t) \ dt \qquad\qquad (25)$$

$$\sigma_3 = \left(\partial/\partial t + \lambda\right)^2 \int E_\beta(t) \ dt \qquad\qquad (26)$$

$$\sigma_4 = \left(\partial/\partial t + \lambda\right)^3 \int E_{TE2}(t) \ dt \qquad\qquad (27)$$

A different embodiment of the invention, which employs second-order sliding-mode control techniques, is shown in Figures 5-7, in which any parts identical to those already described are indicated using the same reference numbers. In this case (Figure 5), in a control device 108, the first and second control signal $U_{FV}$, $U_{IGV}$ are generated by a first regulator 124 and a second regulator 125 respectively. As shown in Figure 6, first regulator 124 comprises regulating lines 30, 31, 32, minimum-selection port 33, and a first switch stage 135 connected to the minimum-selection port. Regulating lines 30, 31, 32 supply sliding surfaces $\sigma_1$, $\sigma_2$, $\sigma_3$ calculated according to the equations :

$$\sigma_1 = \left(\partial/\partial t + \lambda\right) E_\omega(t) \qquad\qquad (28)$$

(if main breaker 3 is open)

$$\sigma_1 = (\partial/\partial t + \lambda)E_{PE}(t) \qquad (29)$$

(if main breaker 3 is closed)

$$\sigma_2 = (\partial/\partial t + \lambda)E_{TE1}(t) \qquad (30)$$

$$\sigma_3 = \lambda E_\beta(t) \qquad (31)$$

Alternatively, the following equations may be used (integral control) :

$$\sigma_1 = (\partial/\partial t + \lambda)^2 \int E_\omega(t)\ dt \qquad (32)$$

(if main breaker 3 is open)

$$\sigma_1 = (\partial/\partial t + \lambda)^2 \int E_{PE}(t)\ dt \qquad (33)$$

(if main breaker 3 is closed)

$$\sigma_2 = (\partial/\partial t + \lambda)^2 \int E_{TE1}(t)\ dt \qquad (34)$$

$$\sigma_3 = (\partial/\partial t + \lambda) \int E_\beta(t)\ dt$$

The least of sliding surfaces $\sigma_1$, $\sigma_2$, $\sigma_3$ is selected by minimum-selection port 33 and sent to first switch stage 135 as minimum sliding surface $\sigma_{MIN}$. First switch stage 135 generates first control signal $U_{FV}$ using minimum sliding surface $\sigma_{MIN}$ and according to the equation:

$$U_{FV} = -H^2\ \alpha(\sigma_{MIN})\ sat|\sigma_{MIN}/\Phi|\ sgn(\sigma_{MIN}-\gamma\sigma_{MAX}) \qquad (35)$$

where $\sigma(\sigma_{MIN})$ is a constant whose value is selected on the basis of minimum sliding surface $\sigma_{MIN}$: and $\sigma_{MAX}$ is the maximum peak value detected. The first control signal $U_{FV}$ so generated satisfies the convergence conditions of the second-order sliding-mode algorithms, and so eliminates in finite time speed error $E_\omega$, power error $E_{PE}$, first temperature error $E_{TE1}$, and compression ratio error $E_\beta$.

With reference to Figure 7, second regulator 125 comprises fifth subtraction node 48, fourth generating stage 50, and a second switch stage 151. Fourth generating stage 50 generates fourth sliding surface $\sigma_4$ from second temperature error $E_{TE2}$ according to the equation :

$$\sigma_4 = (\partial/\partial t + \lambda) E_{TE2}(t) \qquad\qquad (36)$$

or according to the equation (integral control) :

$$\sigma_4 = (\partial/\partial t + \lambda)^2 \int E_{TE2}(t)\ dt \qquad\qquad (37)$$

Second switch stage 151 receives and uses fourth sliding surface $\sigma_4$ to generate second control signal $U_{IGV}$ according to the equation :

$$U_{IGV} = -H^2\ \alpha(\sigma_4)\ \text{sat}|\sigma_4/\Phi|\ \text{sgn}(\sigma_4 - \gamma\sigma_{MAX}) \qquad\qquad (38)$$

Since second control signal $U_{IGV}$ also satisfies the convergence conditions of the sliding-mode algorithms, second temperature error $E_{TE2}$ tends towards zero in finite time.

Control device 108 also has the further advantage of attenuating so-called "chattering", i.e. high-frequency oscillations generated about the regulation point by rapid, persistent control signal switching, and which are sometimes caused by poor system modelling (e.g. neglected dominant dynamics).

Clearly, changes may be made to the control device as described herein without, however, departing from the scope of the present invention, as defined in the accompanying Claims. In particular, the sliding-mode technique may be used solely for the first or second regulator of the control device according to the invention, while synthesis of the other may be based on conventional techniques, such as proportional-integral controllers. For example, the regulator supplying second control signal $U_{IGV}$ for the actuator associated with the variable-geometry stage of the compressor is less critical. In this case, obviously, performance of the control device in terms of stability and response would be inferior, but even only one sliding-mode regulator would be sufficient to bring about a big improvement as compared with conventional control devices.

## Claims

1. A device for controlling an electric power generating system including a gas turbine (15); a compressor (12, 13); a combustion chamber (14); and an electric power generator (6) connected mechanically to the gas turbine;

   the device comprising regulating means (24, 25; 124, 125) supplying a first control signal ($U_{FV}$) for controlling fuel supply to the combustion chamber (14); and a second control signal ($U_{IGV}$) for controlling air intake by the compressor (12, 13);

   **characterized in that** said regulating means (24, 25; 124, 125) are configured to generate said first ($U_{FV}$) and second ($U_{IGV}$) control signals in sliding-mode control manner and comprise a first sliding-mode regulator (24; 124) supplying said first control signal ($U_{FV}$) and a second sliding-mode regulator (25; 125) supplying said second control signal ($U_{IGV}$);

   wherein said first sliding-mode regulator (24; 124) comprises:

   a first switch stage (35; 135) generating said first control signal ($U_{FV}$) on the basis of a first set of variables ($\omega$, $P_E$, $\beta$, $T_E$, $T_{EC}$) acquirable from the system, and on the basis of respective first reference values ($\omega_R$, $P_{ER}$, $\beta_{MAX}$, $T_{MAX}$), said first set of variables ($\omega$, $P_E$, $\beta$, $T_E$, $T_{EC}$) including at least an angular speed ($\omega$) of the gas turbine (15), an active electric power ($P_E$) supplied by the generator (6), an exhaust gas temperature ($T_E$, $T_{EC}$) of the gas turbine (15) and a compression ratio ($\beta$); and

   a first, a second, and a third generating stage (41, 45, 47) supplying a first, a second, and a third sliding surface ($\sigma_1$, $\sigma_2$, $\sigma_3$) respectively representative of an angular speed error ($E_\omega$) and an active electric power error ($E_{PE}$) of a first exhaust gas temperature error ($E_{TE1}$) and of a compression ratio error ($E_\beta$), said first switch stage (35; 135) generating said first control signal ($U_{FV}$) on the basis of a minimum surface ($\sigma_{MIN}$) selected from said first, said second, and said third sliding surface ($\sigma_1$, $\sigma_2$, $\sigma_3$);

   and wherein said second sliding-mode regulator (25; 125) comprises:

a second switch stage (51; 151) generating said second control signal ($U_{IGV}$) on the basis of a second set of variables ($T_E$, $T_{EC}$) acquirable from the system, and on the basis of respective second reference values ($T_R$), said second set of variables ($T_E$, $T_{EC}$) including said exhaust gas temperature; and

a fourth generating stage (50) supplying a fourth sliding surface ($\sigma_4$) representative of a second exhaust gas temperature error ($E_{TE2}$), said second switch stage (51; 151) generating said second control signal ($U_{IGV}$) on the basis of said fourth sliding surface ($\sigma_4$).

2. A device as claimed in Claim 1, **characterized by** comprising a minimum-selection port (33) receiving said first, said second, and said third sliding surface ($\sigma_1$, $\sigma_2$, $\sigma_3$) and supplying said minimum surface ($\sigma_{MIN}$) to said first switch stage (35; 135).

3. A device as claimed in any one of Claims 1 or 2, **characterized in that** said first sliding-mode regulator (24; 124) is a first-order or second-order sliding-mode regulator.

4. A device as claimed in any one of the foregoing Claims, **characterized in that** said second sliding-mode regulator (25; 125) is a first-order or second-order sliding-mode regulator.

5. An electric power generating system comprising a gas turbine (15); a compressor (12, 13); a combustion chamber (14); and an electric power generator (6) connected mechanically to the gas turbine; **characterized by** comprising a control device (8; 108) as claimed in any one of the foregoing Claims.

6. A method of controlling an electric power generating system including a gas turbine (15); a compressor (12, 13); a combustion chamber (14); and an electric power generator (6) connected mechanically to the gas turbine; the method comprising the steps of generating a first control signal ($U_{FV}$) for controlling fuel supply to the combustion chamber (14); and generating a second control signal ($U_{IGV}$), for controlling air intake by the compressor (12, 13); **characterized in that** said first ($U_{FV}$) and second ($U_{IGV}$) control signals is generated in sliding-mode control manner; wherein said first control signal ($U_{FV}$) is generated on the basis of a first set of variables ($\omega$, $P_E$, $\beta$, $T_E$, $T_{EC}$) acquirable from the system, and on the basis of respective first reference values ($\omega_R$, $P_{ER}$, $\beta_{MAX}$, $T_{MAX}$), said first set of variables ($\omega$, $P_E$, $\beta$, $T_E$, $T_{EC}$) including at least an angular speed ($\omega$) of the gas turbine (15), an active electric power ($P_E$) supplied by the generator (6), an exhaust gas temperature ($T_E$, $T_{EC}$) of the gas turbine (15) and a compression ratio ($\beta$); wherein the step of generating the first control signal ($U_{FV}$) comprises generating a first, a second, and a third sliding surface ($\sigma_1$, $\sigma_2$, $\sigma_3$) respectively representative of an angular speed error ($E_\omega$) and an active electric power error ($E_{PE}$), of a first exhaust gas temperature error ($E_{TE1}$) and of a compression ratio error ($E_\beta$), said first control signal ($U_{FV}$) being generated on the basis of a minimum surface ($\sigma_{MIN}$) selected from said first, said second, and said third sliding surface ($\sigma_1$, $\sigma_2$, $\sigma_3$); wherein said second control signal ($U_{IGV}$) is generated on the basis of a second set of variables ($T_E$, $T_{EC}$) acquirable from the system, and on the basis of respective second reference values ($T_R$), said second set of variables ($T_E$, $T_{EC}$) including said exhaust gas temperature; and wherein the step of generating the second control signal ($U_{IGV}$) comprises generating a fourth sliding surface ($\sigma_4$) representative of a second exhaust gas temperature error ($E_{TE2}$).

7. A method as claimed in Claims 6, **characterized in that** the first control signal ($U_{FV}$) is generated in first-order or second-order sliding-mode control manner.

8. A method as claimed in Claim 6 or 7, **characterized in that** said second control signal ($U_{IGV}$) is generated on the basis of said fourth sliding surface ($\sigma_4$).

9. A method as claimed in any one of Claims 6 to 8, **characterized in that** said second control signal ($U_{IGV}$) is generated in first-order or second-order sliding-mode control manner.

**Patentansprüche**

1. Einrichtung zum Steuern eines elektrischen Stromerzeugungssystems, das eine Gasturbine (15); einen Kompressor (12, 13); eine Verbrennungskammer (14); und einen elektrischen Stromerzeuger (6) aufweist, der mechanisch mit der Gasturbine verbunden ist; wobei die Einrichtung umfasst: ein Regelungsmittel (24, 25; 124, 125), das ein erstes Steuersignal ($U_{FV}$) zum Steuern von Kraftstoffzufuhr an die Verbrennungskammer (14) liefert, und ein zweites Steuersignal ($U_{IGV}$) zum Steuern von Lufteinlass durch den Kompressor (12, 13);

**dadurch gekennzeichnet, dass** das Regelungsmittel (24, 25; 124, 125) eingerichtet ist, das erste ($U_{FV}$) und zweite ($U_{IGV}$) Steuersignal in Gleitmodusart zu erzeugen und einen ersten Gleitmodusregulator (24; 124), der das erste Steuersignal ($U_{FV}$) liefert, umfasst und einen zweiten Gleitmodusregulator (25; 125), der das zweite Steuersignal ($I_{IGV}$) liefert;

wobei der erste Gleitmodusregulator (24; 124) umfasst:

eine erste Schaltstufe (35; 135), die das erste Steuersignal ($U_{FV}$) auf der Basis eines ersten variablen Satzes ($\omega$, $P_E$, $\beta$, $T_E$, $T_{EC}$) erzeugt, die von dem System erreichbar sind, und auf der Basis von entsprechenden ersten Referenzwerten ($\omega$, $P_{ER}$, $\beta_{MAX}$, $T_{MAX}$), wobei der erste Variablensatz ($\omega$, $P_E$, $\beta$, $T_E$, $T_{EC}$) wenigstens eine Winkelgeschwindigkeit ($\omega$) der Gasturbine (15) aufweist, eine elektrische Wirkleistung ($P_E$), die von dem Erzeuger (6) geliefert wird, eine Auslassgastemperatur ($T_E$, $T_{EC}$) der Gasturbine (15) und ein Kompressionsverhältnis ($\beta$); und

eine erste, eine zweite und eine dritte Erzeugungsstufe (41, 45, 47), die eine erste, eine zweite und eine dritte Gleitfläche ($\sigma_1$, $\sigma_2$, $\sigma_3$) liefern, die entsprechend repräsentativ für einen Winkelgeschwindigkeitsfehler ($E_\omega$) und einen elektrischen Wirkleistungsfehler ($E_{PE}$), für einen ersten Auslassgastemperaturfehler ($E_{TE_1}$) und für einen Kompressionsverhältnisfehler ($E_\beta$) sind, wobei die erste Schaltstufe (35; 135) das erste Steuersignal ($U_{FV}$) auf der Basis einer Minimalfläche ($\sigma_{MIN}$) erzeugt, die aus der ersten, der zweiten und der dritten Gleitfläche ($\sigma_1$, $\sigma_2$, $\sigma_3$) gewählt ist;

und wobei der zweite Gleitmodusregulator (25; 125) umfasst:

eine zweite Schaltstufe (51; 151), die das zweite Steuersignal ($U_{IGV}$) auf der Basis eines zweiten Variablensatzes ($T_E$, $T_{EC}$) erzeugt, der von dem System erreichbar ist, und auf der Basis entsprechender zweiter Referenzwerte ($T_R$), wobei der zweite Variablensatz ($T_E$, $T_{EC}$) die Auslassgastemperatur aufweist; und eine vierte Erzeugungsstufe (50), die eine vierte Gleitfläche ($\sigma_4$) liefert, die repräsentativ für einen zweiten Auslassgastemperaturfehler ($E_{TE_2}$) ist, wobei die zweite Schaltstufe (51; 151) das zweite Steuersignal ($U_{IGV}$) auf der Basis der vierten Gleitfläche ($\sigma_4$) erzeugt.

2. Einrichtung, wie in Anspruch 1 beansprucht, **dadurch gekennzeichnet, dass** sie ein Minimumwahlanschluss (33) zum Empfangen der ersten, der zweiten und der dritten Gleitfläche ($\sigma_1$, $\sigma_2$, $\sigma_3$) aufweist, und die Minimalfläche ($\sigma_{MIN}$) an die erste Schaltstufe (35; 135) liefert.

3. Einrichtung, wie in einem der Ansprüche 1 oder 2 beansprucht, **dadurch gekennzeichnet, dass** der erste Gleitmodusregulator (24; 124) ein Gleitmodusregulator einer ersten Ordnung oder einer zweiten Ordnung ist.

4. Einrichtung, wie in einem der vorhergehenden Ansprüche beansprucht, **dadurch gekennzeichnet, dass** der zweite Gleitmodusregulator (25; 125) ein Gleitmodusregulator einer ersten Ordnung oder einer zweiten Ordnung ist.

5. Elektrisches Stromerzeugungssystem, das eine Gasturbine (15); einen Kompressor (12, 13); eine Verbrennungskammer (14); und einen elektrischen Stromerzeuger (6), der mechanisch mit der Gasturbine verbunden ist, umfasst, **dadurch gekennzeichnet, dass** es eine Steuereinrichtung (8; 108), wie in einem der vorhergehenden Ansprüche beansprucht, umfasst.

6. Verfahren zum Steuern eines elektrischen Stromerzeugungssystems, das eine Gasturbine (15); einen Kompressor (12, 13); eine Verbrennungskammer (14); und einen elektrischen Stromerzeuger (6), der mechanisch mit der Gasturbine verbunden ist, aufweist;

wobei das Verfahren die Schritte umfasst:

Erzeugen eines ersten Steuersignals ($U_{FV}$) zum Steuern einer Kraftstoffzufuhr an die Verbrennungskammer (14); und

Erzeugen eines zweiten Steuersignals ($U_{IGV}$) zum Steuern eines Lufteinlasses durch den Kompressor (12, 13);

**dadurch gekennzeichnet, dass** das erste ($U_{FV}$) und das zweite ($U_{IGV}$) Steuersignal auf Gleitmodussteuerart erzeugt wird;

wobei das erste Steuersignal ($U_{FV}$) auf der Basis eines ersten Variablensatzes ($\omega$, $P_E$, $\beta$, $T_E$, $T_{EC}$) erzeugt wird, der von dem System erreichbar ist, und auf der Basis entsprechender erster Referenzwerte ($\omega_R$, $P_{ER}$, $\beta_{MAX}$, $T_{MAX}$), wobei der erste Variablensatz ($\omega$, $P_E$, $\beta$, $T_E$, $T_{EC}$) wenigstens eine Winkelgeschwindigkeit ($\omega$) der Gas-

turbine (15) aufweist, eine elektrische Wirkleistung ($P_E$), die von dem Erzeuger (6) geliefert wird, eine Auslassgastemperatur ($T_E$, $T_{EC}$) der Gasturbine (15) und ein Kompressionsverhältnis ($\beta$);

wobei der Schritt des Erzeugens des ersten Steuersignals ($U_{FV}$) das Erzeugen einer ersten, einer zweiten und einer dritten Gleitfläche ($\sigma_1$, $\sigma_2$, $\sigma_3$) umfasst, die entsprechend repräsentativ für einen Winkelgeschwindigkeits-fehler ($E_\omega$) und einen elektrischen Wirkleistungsfehler ($E_{PE}$) sind, für einen ersten Auslassgastemperaturfehler ($E_{TE1}$) und für einen Kompressionsverhältnisfehler ($E_\beta$), wobei das erste Steuersignal ($U_{FV}$) auf der Basis einer Minimalfläche ($\sigma_{MIN}$) erzeugt wird, die aus der ersten, der zweiten und der dritten Gleitfläche ($\sigma_1$, $\sigma_2$, $\sigma_3$) gewählt wird;

wobei das zweite Steuersignal ($U_{IGV}$) auf der Basis eines zweiten Variablensatzes ($T_E$, $T_{EC}$) erzeugt wird, der von dem System erreichbar ist, und auf der Basis entsprechender zweiter Referenzwerte ($T_R$); wobei der zweite Variablensatz ($T_E$, $T_{EC}$) die Auslassgastemperatur aufweist; und

wobei der Schritt des Erzeugens des zweiten Steuersignals ($U_{IGV}$) das Erzeugen einer vierten Gleitfläche ($\sigma_4$) umfasst, die repräsentativ für einen zweiten Auslassgastemperaturfehler ($E_{TE2}$) ist.

**7.** Verfahren, wie in Anspruch 6 beansprucht, **dadurch gekennzeichnet, dass** das erste Steuersignal ($U_{FV}$) in Gleitmodussteuerart erster Ordnung oder zweiter Ordnung erzeugt wird.

**8.** Verfahren, wie in Anspruch 6 oder 7 beansprucht, **dadurch gekennzeichnet, dass** das zweite Steuersignal ($U_{IGV}$) auf Basis der vierten Gleitfläche ($\sigma_4$) erzeugt wird.

**9.** Verfahren, wie in einem der Ansprüche 6 bis 8 beansprucht, **dadurch gekennzeichnet, dass** das zweite Steuersignal ($U_{IGV}$) in Gleitmodussteuerart erster Ordnung oder zweiter Ordnung erzeugt wird.

**Revendications**

**1.** Dispositif pour contrôler un système de production d'énergie électrique comprenant une turbine à gaz (15) ; un compresseur (12, 13) ; une chambre de combustion (14) ; et un générateur d'énergie électrique (6) raccordé mécaniquement à la turbine à gaz ;

le dispositif comprenant des moyens de régulation (24, 25 ; 124, 125) fournissant un premier signal de contrôle ($U_{FV}$) pour contrôler l'alimentation de carburant à la chambre de combustion (14) ; et un deuxième signal de contrôle ($U_{IGV}$) pour contrôler l'admission d'air par le compresseur (12, 13) ;

**caractérisé en ce que** lesdits moyens de régulation (24, 25 ; 124, 125) sont configurés pour générer lesdits premier ($U_{FV}$) et deuxième ($U_{IGV}$) signaux de contrôle selon un contrôle en mode de coulissement et comprennent un premier régulateur de mode de coulissement (24 ; 124) fournissant ledit premier signal de contrôle ($U_{FV}$) et un deuxième régulateur de mode de coulissement (25 ; 125) fournissant ledit deuxième signal de contrôle ($U_{IGV}$) ;

dans lequel ledit premier régulateur de mode de coulissement (24 ; 124) comprend :

un premier stade de commutation (35 ; 135) générant ledit premier signal de contrôle ($U_{FV}$) en fonction d'un premier ensemble de variables ($\omega$, $P_E$, $\beta$, $T_E$, $T_{EC}$) pouvant être acquis à partir du système, et en fonction des premières valeurs de référence ($\omega_R$, $P_{ER}$, $\beta_{MAX}$, $T_{MAX}$), ledit premier ensemble de variables ($\omega$, $P_E$, $\beta$, $T_E$, $T_{EC}$) comprenant au moins une vitesse angulaire ($\omega$) de la turbine à gaz (15), une puissance électrique active ($P_E$) fournie par le générateur (6), une température des gaz d'échappement ($T_E$, $T_{EC}$) de la turbine à gaz (15) et un rapport de compression ($\beta$) ; et

un premier, un deuxième et un troisième stade de génération (41, 45, 47) fournissant une première, une deuxième et une troisième surface de coulissement ($\sigma_1$, $\sigma_2$, $\sigma_3$) représentant respectivement une erreur de vitesse angulaire ($E_\omega$) et une erreur de puissance électrique active ($E_{PE}$), une première erreur de température des gaz d'échappement ($E_{TE1}$) et une erreur de rapport de compression ($E_\beta$), ledit premier stade de commutation (35 ; 135) générant ledit premier signal de contrôle ($D_{FV}$) en fonction d'une surface minimum ($\sigma_{MIN}$) choisie parmi ladite première, ladite deuxième et ladite troisième surface de coulissement ($\sigma_1$, $\sigma_2$, $\sigma_3$) ;

et dans lequel ledit deuxième régulateur de mode de coulissement (25 ; 125) comprend :

un deuxième stade de commutation (51 ; 151) générant ledit deuxième signal de commande ($U_{IGV}$) en fonction d'un deuxième ensemble de variables ($T_E$, $T_{EC}$) pouvant être acquis à partir du système, et en fonction des deuxièmes valeurs de référence ($T_R$) respectives, ledit deuxième ensemble de variables ($T_E$, $T_{EC}$) comprenant ladite température des gaz d'échappement ; et

un quatrième stade de génération (50) fournissant une quatrième surface de coulissement ($\sigma_4$) représentant

une deuxième erreur de température des gaz d'échappement ($E_{TE2}$), ledit deuxième stade de commutation (51 ; 151) générant ledit deuxième signal de contrôle ($U_{IGV}$) en fonction de ladite quatrième surface de coulissement ($\sigma_4$).

2. Dispositif selon la revendication 1, **caractérisé en ce qu'**il comprend un orifice de sélection minimum (33) recevant ladite première, ladite deuxième et ladite troisième surface de coulissement ($\sigma_1$, $\sigma_2$, $\sigma_3$) et alimentant ladite surface minimum ($\sigma_{MIN}$) audit premier stade de commutation (35 ; 135).

3. Dispositif selon l'une quelconque des revendications 1 ou 2, **caractérisé en ce que** ledit premier régulateur de mode de coulissement (24 ; 124) est un régulateur de mode de coulissement de premier ordre ou de deuxième ordre.

4. Dispositif selon l'une quelconque des revendications précédentes, **caractérisé en ce que** ledit deuxième régulateur de mode de coulissement (25 ; 125) est un régulateur de mode de coulissement de premier ordre ou de deuxième ordre.

5. Système de production d'énergie électrique comprenant une turbine à gaz (15) ; un compresseur (12, 13) ; une chambre de combustion (14) ; et un générateur d'énergie électrique (6) raccordé mécaniquement à la turbine à gaz ; **caractérisé en ce qu'**il comprend un dispositif de contrôle (8 ; 108) selon l'une quelconque des revendications précédentes.

6. Procédé pour contrôler un système de production d'énergie électrique comprenant une turbine à gaz (15) ; un compresseur (12, 13) ; une chambre de combustion (14) ; et un générateur d'énergie électrique (6) raccordé mécaniquement à la turbine à gaz ;
le procédé comprenant les étapes consistant à générer un premier signal de contrôle ($U_{FV}$) pour contrôler l'alimentation de carburant dans la chambre de combustion (14) ; et générer un deuxième signal de contrôle ($U_{IGV}$) pour contrôler l'admission d'air par le compresseur (12, 13) ;
**caractérisé en ce que** lesdits premier ($U_{FV}$) et deuxième ($U_{IGV}$) signaux de contrôle sont générés selon un contrôle en mode de coulissement ;
dans lequel ledit premier signal de contrôle ($U_{FV}$) est généré en fonction d'un premier ensemble de variables ($\omega$, $P_E$, $\beta$, $T_E$, $T_{EC}$) pouvant être acquis à partir du système, et en fonction des premières valeurs de référence ($\omega_R$, $P_{ER}$, $\beta_{MAX}$, $T_{MAX}$), ledit premier ensemble de variables ($\omega$, $P_E$, $\beta$, $T_E$, $T_{EC}$) comprenant au moins une vitesse angulaire ($\omega$) de la turbine à gaz (15), une puissance électrique active ($P_E$) fournie par le générateur (6), une température des gaz d'échappement ($T_E$, $T_{EC}$) de la turbine à gaz (15) et un rapport de compression ($\beta$) ;
dans lequel l'étape consistant à générer le premier signal de contrôle ($U_{FV}$) comprend l'étape consistant à générer une première, une deuxième et une troisième surface de coulissement ($\sigma_1$, $\sigma_2$. $\sigma_3$) représentant respectivement une erreur de vitesse angulaire ($E_\omega$) et une erreur de puissance électrique active ($E_{PE}$), une première erreur de température des gaz d'échappement ($E_{TE1}$) et une erreur de rapport de compression ($E_\beta$), ledit premier signal de contrôle ($U_{FV}$) étant généré en fonction d'une surface minimum ($\sigma_{MIN}$) choisie parmi ladite première, ladite deuxième et ladite troisième surface de coulissement ($\sigma_1$, $\sigma_2$, $\sigma_3$) ;
dans lequel ledit deuxième signal de contrôle ($U_{IGV}$) est généré en fonction d'un deuxième ensemble de variables ($T_E$, $T_{EC}$) pouvant être acquis à partir du système, et en fonction des deuxièmes valeurs de référence ($T_R$) respectives, ledit deuxième ensemble de variables ($T_E$, $T_{EC}$) comprenant ladite température des gaz d'échappement ;
et dans lequel l'étape consistant à générer le deuxième signal de contrôle ($U_{IGV}$) comprend l'étape consistant à générer une quatrième surface de coulissement ($\sigma_4$) représentant une deuxième erreur de température des gaz d'échappement ($E_{TE2}$).

7. Procédé selon la revendication 6, **caractérisé en ce que** le premier signal de contrôle ($U_{FV}$) est généré selon un contrôle du mode de coulissement de premier ordre ou de deuxième ordre.

8. Procédé selon la revendication 6 ou 7, **caractérisé en ce que** ledit deuxième signal de contrôle ($U_{IGV}$) est généré en fonction de ladite quatrième surface de coulissement ($\sigma_4$).

9. Procédé selon l'une quelconque des revendications 6 à 8, **caractérisé en ce que** ledit deuxième signal de contrôle ($U_{IGV}$) est généré selon un contrôle de mode de coulissement de premier ordre ou de deuxième ordre.

**Fig.1**

**Fig.4**

**Fig.7**

Fig.2

Fig.5

16

**Fig.3**

**Fig.6**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2002295661 A

• JP 1294915 A

**Non-patent literature cited in the description**

• **CHANG G-K et al.** Modified integral variable structrue model following control of synchronous generator. *PROCEEDINGS OF THE 2001 AMERICAN CONTROL CONFERENCE ACC. ARLINGTON, VA, JUNE 25-27, 2001,* 25 June 2001, vol. 2, 823-828

• **SENJYU T et al.** Cooperative control of AVR and GOV for improving transient stability of power systems using fuzzy controlled. *NEURAL NETWORKS TO POWER SYSTEMS, 1993, ANNPS '93, PROCEEDINGS OF THE SECOND INTERNATIONAL FORUM ON APPLICATIONS OF YOKOHAMA,* 19 April 1993, 35-40